# EUROPEAN PATENT SPECIFICATION

(11) **EP 3 745 213 B1**
(45) Date of publication and mention of the grant of the patent: **01.01.2025**
(21) Application number: 20173637.8
(22) Date of filing: 08.05.2020
(51) Int. Cl.: G03G 15/20, G03G 15/00, G06F 1/26

(54) **POWER CONTROL DEVICE, POWER CONSUMPTION APPARATUS, IMAGE FORMING APPARATUS, AND POWER CONTROL METHOD**
LEISTUNGSSTEUERUNGSVORRICHTUNG, LEISTUNGSVERBRAUCHSGERÄT, BILDERZEUGUNGSGERÄT UND LEISTUNGSSTEUERUNGSVERFAHREN
DISPOSITIF DE COMMANDE DE PUISSANCE, APPAREIL DE CONSOMMATION D'ÉNERGIE, APPAREIL DE FORMATION D'IMAGES ET PROCÉDÉ DE COMMANDE D'ALIMENTATION

(30) Priority: 29.05.2019 JP 2019100256
(43) Date of publication of application: 02.12.2020
(73) Proprietor: Ricoh Company, Ltd., Tokyo 143-8555 (JP)
(72) Inventor: NAKAJIMA, Mikio, Tokyo 143-8555 (JP)
(74) Representative: SSM Sandmair

(56) References cited:
- US-A1- 2003 155 349
- US-A1- 2012 263 486
- US-A1- 2013 094 876

## Description

### Technical Field

The present disclosure relates to a power control device, a power consumption apparatus, an image forming apparatus, a power control method, and carrier means carrying computer readable codes for executing the method.

### Description of the Related Art

There are electrophotographic image forming apparatuses that include, as a load that consumes electrical power, a fixing heater (fixing means) to fix a toner image on a recording medium such as transfer paper. To control the power of an image forming apparatus, for example, the power consumed by loads other than the fixing heater is detected, and the total power used by the image forming apparatus is controlled not to exceed the rated power (for example, 1500 W) of the image forming apparatus.

For example, an image forming apparatus disclosed in JP-2006-189744-A includes fixing means connected to an alternating-current (AC) power supply; a direct-current (DC) power supply having a primary side connected to the AC power supply and a secondary side connected to a load to supply DC power to the load; detection means that detects a secondary current of the DC power supply; and control means that controls power supply to the fixing means based on a detection signal of the secondary current.

The image forming apparatus disclosed in JP-2006-189744-A supplies the fixing means with the amount of power calculated by subtracting the power consumption of the DC load from the rated power. However, there are variations in the power consumed by the fixing means of the image forming apparatus depending on individual difference of the fixing means. In the technology disclosed in JP-2006-189744-A, power supply to the fixing means is not optimized because the individual difference of the fixing means is not considered.
US 2003/155349 A1 discloses an induction heating apparatus for a fixing device of an image forming apparatus including a rectifying circuit for rectifying a commercial power supply, an excitation coil, a switching element for switching the supply of the output of the rectifying circuit to the excitation coil, and a switching signal output unit for outputting a switching signal for the switching element thereby supplying the excitation coil with a high frequency current. The apparatus limits a current supply time to the excitation coil in such a manner that the maximum output for induction heating is set according to the commercial power supply voltage, thereby reducing the first print time without a power consumption in excess of the rating.
US 2013/094876 A1 discloses an image forming apparatus including a first power calculator for calculating a power consumption amount of driving load unit and a post-processing device based on at least one of measured values of a voltage and a current, which are sup- plied to the driving load unit and the post-processing device; second and third power calculators for calculating power consumption amounts of a fixing heater driving unit and a controller based on an operating state and an operating time of the image forming apparatus; and a power summing-up unit for calculating a power consumption amount of the image forming apparatus by summing up the power consumption amount calculated by the first power calculator and the power consumption amount predicted by each of the second and third power calculators.
US 2012/263486 A1 discloses an image forming apparatus including an image forming unit for forming a toner image on a sheet of paper; a fixing unit for fixing the toner image formed on the sheet of paper by heat; a power control unit for, when power to be supplied to the fixing unit is increased, determining an amount of increase of the power; and a current limiting unit for determining whether current consumption of the image forming apparatus exceeds an upper limit value in response to an increase of the amount of increase determined by the power control unit and, if it is determined that the current consumption exceeds the upper limit value, decreasing the amount of increase of the power determined by the power control unit.

### SUMMARY

In view of the foregoing, an object of the present disclosure is to optimize power supplied to a load.

In order to achieve the above-described object, there is provided a power control device as described in appended claims. Advantageous embodiments are defined by the dependent claims.

A power control device according to claim 1 includes among other features measurement means for measuring electrical power supplied to a load; correction means for correcting a measurement value measured by the measurement means based on a measurement tolerance of the measurement means; and control means. The control means controls the power supplied to the load based on a corrected power value corrected by correction means and a power consumption upper limit of the load.

Advantageously, a power consumption apparatus includes the above-described power control device and the load driven with the supplied power.

Advantageously, an image forming apparatus includes the above-described power control device and a fixing heater as the load, to fix a toner image on a recording medium.

Additionally, there is provided a method for controlling power according to claim 6 The method includes among other features measuring, with measurement means, electrical power supplied to a load to output a measurement value; correcting the measurement value based on a measurement tolerance of the measurement means to output a corrected power value; and controlling the power supplied to the load based on the corrected power value and a power consumption upper limit of the load.

Additionally, there is provided carrier means carrying computer readable code for controlling a computer to carry out the above-described method.

Accordingly, the power supplied to the load can be optimized.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a view illustrating an external appearance of a multifunction copier as an example of a power consumption apparatus according to an embodiment of the present disclosure;
FIG. 2 is a view illustrating a mechanism of a printer unit, functioning as an image forming engine, of the multifunction copier illustrated in FIG. 1;
FIG. 3 is a block diagram illustrating a hardware configuration of a controller illustrated in FIG. 2;
FIG. 4 is a block diagram illustrating main components relating to power control of the multifunction copier according to a first embodiment;
FIG. 5 is a block diagram illustrating a schematic configuration of a power control system according to the first embodiment;
FIG. 6 schematically illustrates a method for correcting power consumption;
FIG. 7 illustrates an example of power distribution to a load of a multifunction copier according to a conventional example and an example of power distribution to a load of a multifunction copier according the first embodiment;
FIG. 8 is a flowchart illustrating processing relating to power control of a fixing heater performed by the power control system;
FIG. 9 is a block diagram illustrating main components relating to power control of a multifunction copier according to a second embodiment; and
FIG. 10 is a block diagram illustrating main components relating to power control of a multifunction copier according to a third embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

Referring now to the drawings, wherein like reference numerals designate identical or corresponding parts throughout the several views thereof, embodiments according to the present disclosure are described. As used herein, the singular forms "a," "an," and "the" are intended to include the plural forms as well, unless the context clearly indicates otherwise.

The suffixes Y, M, C, and K attached to each reference numeral indicate only that components indicated thereby are used for forming yellow, magenta, cyan, and black images, respectively, and hereinafter may be omitted when color discrimination is not necessary.

The embodiments of the present disclosure relates to an electrophotographic image forming apparatus that controls power supply to a fixing heater and has the following features.

The power consumption of the fixing heater is individually detected, and the power supply to the fixing heater is controlled in accordance with the detected power consumption. As the power consumption of the individual fixing heater deviates from a design value more to the minus-side, the power supplied to the fixing heater is increased, thereby supplying the power required by the fixing heater.

### Construction of Multifunction Copier

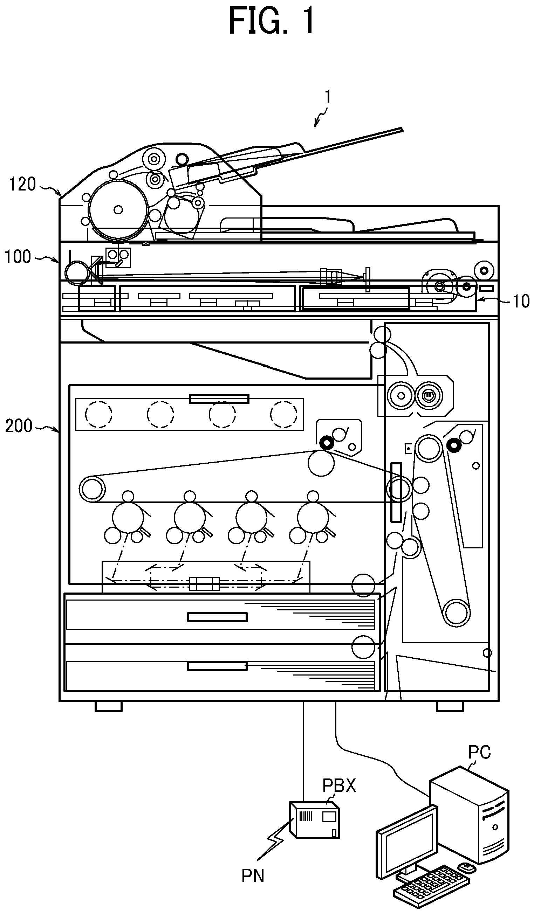

FIG. 1 is a view illustrating an external appearance of a multifunction copier (an image forming apparatus) according to an embodiment of the present disclosure.

A multifunction copier 1 illustrated in FIG. 1 is a full-color digital copier (an image forming apparatus) having multiple functions. The multifunction copier 1 includes an operation board 10 (an operation unit), a color scanner 100 (a reading unit) provided with an automatic document feeder (ADF) 120, and a printer unit 200.

The operation board 10 and the color scanner 100 are units separable from the printer unit 200. The color scanner 100 includes a control board having a power device driver, a sensor input, and a controller. The color scanner 100 directly or indirectly communicates with an engine controller and reads a document image at a controlled timing. For example, the multifunction copier 1 is connected to a personal computer (PC) and a private branch exchange (PBX).

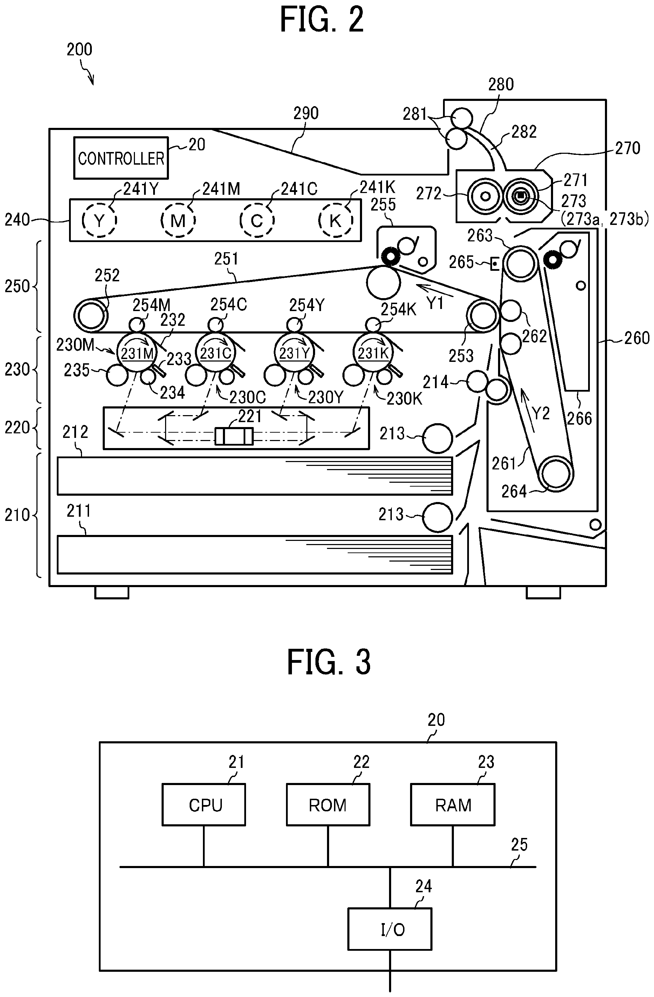

Referring to FIG. 2, a description is given below of a mechanism of the printer unit that functions as an image forming engine of the multifunction copier illustrated in FIG. 1. The printer unit 200 in the present embodiment is a laser printer.

The printer unit 200 includes a sheet feeder unit 210, an exposure device 220, an image forming unit 230, a toner filling section 240, a primary transfer unit 250, a secondary transfer unit 260, a fixing device 270, a conveyor 280, and an output stack 290.

The printer unit 200 in the present embodiment is a full-color image forming apparatus that employs a four-drum system (tandem system) combining a direct transfer system and an indirect transfer system. More specifically, four image forming units 230M, 230C, 230Y, and 230K that form magenta (M), cyan (C), yellow (Y), and black (K) toner images, respectively, are arranged, in this order, opposite a primary transfer belt 251.

In a lower part of the printer unit 200, the sheet feeder unit 210 is disposed. The sheet feeder unit 210 includes sheet feeding trays 211 and 212 that store sheets of recording media (e.g., transfer paper) and sheet feeding rollers 213 (conveyance rollers). A conveyance passage (conveyance guide) for conveying the sheet is formed between the sheet feeding roller 213 and a registration roller pair 214. The sheet on top of sheets stored in the sheet feed tray 211 or 212 is conveyed by the sheet feeding roller 213 one by one to the registration roller pair 214 via a plurality of conveyance guides.

The exposure device (writing unit) 220 includes a light source 221 such as a laser diode (LD) light source. The exposure device 220 irradiates, with light, uniformly charged surfaces of photoconductors 231M to 231K according to optical data corresponding to a full-color image by a known laser method, thus forming latent images on the photoconductors 231M to 231K. In the present embodiment, the exposure device 220 employs a laser system, but an exposure device including a light emitting diode (LED) array and image forming means can be used.

The image forming units 230M to 230K includes the photoconductors 231M to 231K supported and rotatable in the direction indicated by an arrow. Around each of the photoconductor 231M to 231K, a drum cleaner 232, a discharger 233, a charging device 234, and a developing device 235 are disposed.

Above the primary transfer belt 251 and below the output stack 290, the toner filling section (storage section) 240 is disposed. The toner filling section 240 stores toner bottles (toner cartridges) 241Y, 241M, 241C, and 241K that store refill toner. There are four colors of toner, magenta, cyan, yellow, and black, and the toner bottles 241Y to 241K are replaceable. The toner of each color is appropriately supplied from one of the toner bottles 241Y to 241K to the developing device 235 of the corresponding color by a powder pump or the like.

Between the charging device 234 and the developing device 235, a space is secured for passage of the light (optical data) emitted from the LD light source 221 of the exposure device 220.

Regarding the four photoconductors 231 (231M, 231C, 231Y, and 231K), structures of image forming components provided therearound are the same, differing the colors of the colorants (toners) handled by the developing devices 235. In the present embodiment, the photoconductors 231M to 231K are drum-shaped, but belt-shaped photoconductors can be used.

Some of the four photoconductors 231M to 231K are in contact with the primary transfer belt 251 of the primary transfer unit 250. In the primary transfer unit 250, the primary transfer belt 251 is supported by and stretched between a support roller 252 that rotates and a drive roller 253 to be able to rotate in the direction indicated by arrow Y1. The primary transfer belt 251 has an endless (loop) shape.

Primary transfer rollers 254M, 254C, 254Y, and 254K are arranged inside the loop of the primary transfer belt 251 and opposed to the photoconductors 231M to 231K of corresponding colors, respectively, with the primary transfer belt 251 interposed therebetween.

Outside the loop of the primary transfer belt 251, a first belt cleaner 255 to clean the primary transfer belt 251 is disposed. The first belt cleaner 255 wipes off toner remaining on the surface of the primary transfer belt 251 after a toner image is transferred from the primary transfer belt 251 onto a sheet or a secondary transfer belt 261.

The secondary transfer belt 261 of the secondary transfer unit 260 is disposed on the right of the primary transfer belt 251 in the drawing. The primary transfer belt 251 and the secondary transfer belt 261 are in contact with each other and form a secondary transfer nip.

The secondary transfer belt 261 is supported by and stretched between a drive roller 263 and a support roller 264 to be able to rotate in the direction indicated by arrow Y2. The secondary transfer belt 261 has an endless shape (loop-shaped). A secondary transfer roller 262 is disposed inside (back side) of the loop of the secondary transfer belt 261 at position of the secondary transfer nip. A charger 265, a second belt cleaner 266 for the secondary transfer belt 261, and the like are disposed outside the loop of the secondary transfer belt 261. The second belt cleaner 266 wipes off toner remaining on the surface of the secondary transfer belt 261 after the toner image is transferred to the sheet.

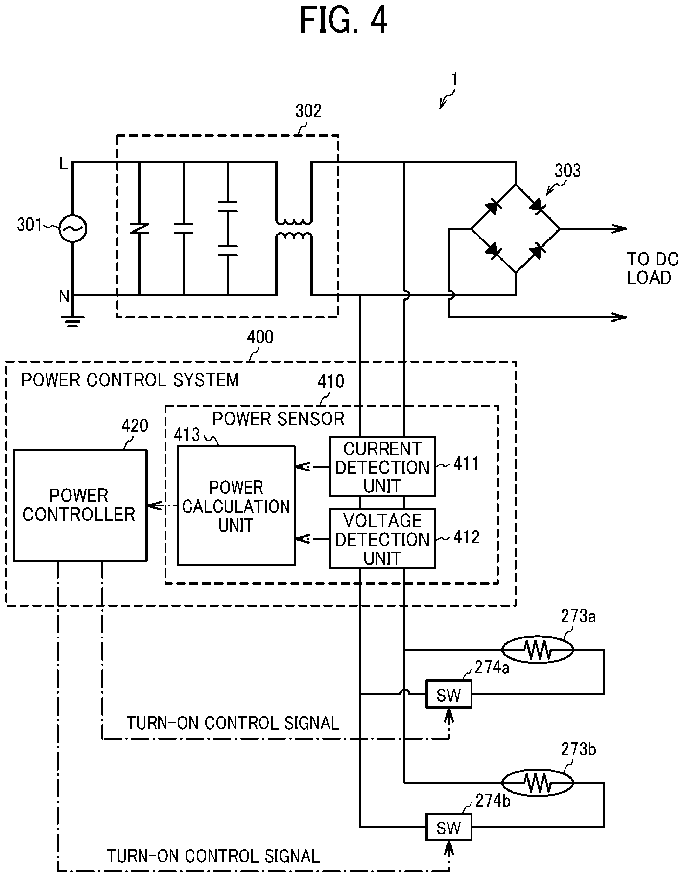

Above the secondary transfer unit 260, the fixing device 270 is disposed. The fixing device 270 includes a heating roller 271 and a pressure roller 272 disposed opposite the heating roller 271. The heating roller 271 includes fixing heaters 273 (273a and 273b in FIG. 4). When the sheet carrying the toner image is conveyed between the heating roller 271 and the pressure roller 272, the toner image is fixed on the sheet with heat and pressure.

A sheet ejection roller pair 281 and a guide 282, which construct the conveyor 280, are disposed downstream from the fixing device 270 in the direction of conveyance of the sheet (hereinafter "sheet conveyance direction"), and the output stack 290 is disposed further downstream thereof.

### Operation in Double-sided Printing

A description is given of operation of each unit in double-sided printing.

First, each of the image forming units 230M to 230K forms an image to be formed on one side (first side) of the sheet. More specifically, the light from the LD light source 221 of the exposure device 220 passes through optical components and reaches the surfaces of the photoconductors 231M to 231K uniformly charged by the charging device 234. With the light, an electrostatic latent image corresponding to the writing information (image information corresponding to the color) is formed on the surface of each of the photoconductors 231M to 231K.

The latent images on the photoconductors 231M to 231K are developed by the developing devices 235, and images rendered visible with toner (toner images) are formed and carried on the surfaces of the photoconductors 231M to 231K.

The toner images are transferred by the primary transfer rollers 254M to 254K onto the surface of the primary transfer belt 251 rotating in synchronization with the photoconductors 231M to 231K.

Then, the drum cleaners 232 clean the toner remaining on the surfaces of the photoconductors 231M to 231K, and the dischargers 233 discharge the surfaces of the photoconductors 231M to 231K. Thus, the surfaces of the photoconductors 231M to 231K are prepared for the next image forming cycle.

The magenta toner image is transferred from the photoconductor 231M to the primary transfer belt 251 rotating in the direction indicated by arrow Y1 at a portion facing the image forming unit 230M. Subsequently, the cyan toner image is transferred from the photoconductor 231C to the primary transfer belt 251 at a portion facing the image forming unit 230C. The cyan toner image thus transferred is superimposed on the magenta toner image on the primary transfer belt 251. Thereafter, the yellow and black toner images are sequentially transferred and superimposed on the toner images on the primary transfer belt 251. The four color toner images form a full-color toner image on the primary transfer belt 251. In the case of monochrome printing, the printer unit 200 can form a monochrome black (K) image using only the image forming unit 230K.

The secondary transfer belt 261 rotates in the direction indicated by arrow Y2 in synchronization with the rotating primary transfer belt 251. In the secondary transfer nip, which is formed by the secondary transfer roller 262 and the drive roller 253 pressing against the secondary transfer belt 261 and the primary transfer belt 251, the toner image is transferred from the primary transfer belt 251 to the secondary transfer belt 261.

In the present embodiment, while the four image forming units 230M to 230K, which construct a so-called tandem system, form images on the respective photoconductors 231M to 231, the primary transfer belt 251 and the secondary transfer belt 261 rotate to proceed with image formation. Accordingly, the time of image formation can be reduced.

When the primary transfer belt 251 rotates to a predetermined position, toner images to be formed on the other side (second side) of the sheet are formed on the photoconductors 231M to 231K in the above-described steps, and the sheet feeding is started.

In accordance with the formation of the toner images in the image forming units 230M to 230K, the sheet on the top on the sheet feeding tray (cassette) 211 or 112 is pulled out and conveyed to the registration roller pair 214.

The sheet is sent between the primary transfer belt 251 and the secondary transfer belt 261 at a timing adjusted by the registration roller pair 214. The toner image on the surface of the primary transfer belt 251 is transferred by the secondary transfer roller 262 to one side (the second side) of the sheet.

The sheet is further conveyed upward in the drawing, and the toner image on the surface of the secondary transfer belt 261 is transferred to the second side of the sheet by the charger 265. The sheet is conveyed, timed to coincide with the transfer. Accordingly, the toner image is transferred at a proper position.

The sheet carrying the transferred toner images on both sides thereof is sent to the fixing device 270. The heating roller 271 and the pressure roller 272 fuse the toner images on both sides of the sheet at a time and fixe the toner images on the sheet.

Then, the sheet is guided by the guide 282 and ejected by the sheet ejection roller pair 281 to the output stack 290 on the upper side of the main body frame.

When the conveyor 280 and the output stack 290 are constructed as illustrated in FIG. 2, the sheet is stacked on the output stack 290 such that the side (page) carrying one of the two images transferred first onto the sheet, that is, the side to which the toner image is directly transferred from the primary transfer belt 251, is faced down. Therefore, in order to align the pages, the image of the second page is formed first, the second page toner image is held on the secondary transfer belt 261, and the image of the first page is directly transferred from the primary transfer belt 251 to the sheet.

The image transferred directly from the primary transfer belt 251 to the sheet is formed as a normal image on the photoconductor 231, and the toner image transferred from the secondary transfer belt 261 to the sheet is formed as a reverse image (mirror image) on the surface of the photoconductor in the exposure. The order of image formation for such page alignment and the image processing for switching between the normal image and the reverse image (mirror image) are executed by controlling the reading and writing of image data from and to a memory on a controller 20.

After the transfer of the toner image from the secondary transfer belt 261 onto the sheet, the second belt cleaner 266 removes toner and paper dust remaining on the secondary transfer belt 261. The second belt cleaner 266 includes a brush roller, a collection roller, a blade, etc.

In FIG. 2, the brush roller of the second belt cleaner 266 is separated from the surface of the secondary transfer belt 261. However, the brush roller can pivot about a fulcrum to contact the secondary transfer belt 261 and move away therefrom. Before the transfer onto the sheet and when the secondary transfer belt 261 carries the toner image, the brush roller is separated therefrom. When cleaning is necessary, the brush roller pivots counterclockwise in the drawing and contacts the secondary transfer belt 261. The removed toner is collected in a toner collecting section.

The image forming process of double-sided printing in "duplex transfer mode" is described above. The double-sided printing is made always by the image forming process described above.

For single-sided printing, there are two modes, "one-sided transfer mode using the secondary transfer belt 261" and "one-sided transfer mode using the primary transfer belt 251."

When the former one-side transfer mode using the secondary transfer belt 261 is set, a visible image formed by three-colors or four-color superimposition or a single black color on the primary transfer belt 251 is transferred onto the secondary transfer belt 261 and then transferred onto one side of the sheet. Image transfer onto the other side of the sheet is not performed. In this case, the printed sheet is ejected onto the output stack 290 such that the print side of the printed sheet is faced up.

When the latter one-sided transfer mode using the primary transfer belt 251 is set, a visible image formed by three-color or four-color superposition or single black color on the primary transfer belt 251 is transferred not onto the secondary transfer belt 261 but directly to one side of the sheet. Image transfer onto the other side of the sheet is not performed. In this case, the printed sheet is ejected onto the output stack 290 such that the print side of the printed sheet is faced down.

### Configuration of Controller

FIG. 3 is a block diagram illustrating a hardware configuration of the controller 20 illustrated in FIG. 2.

The controller 20 is a computer that includes a central processing unit (CPU) 21, a read only memory (ROM) 22, a random access memory (RAM) 23, and an input/output (I/O) unit 24, which are connected via a bus 25.

The CPU 21 is a processor that controls the entire printer unit 200. The ROM 22 is a nonvolatile memory that stores control programs executed by the CPU 21, data, and the like. The RAM 23 is a volatile memory used as a work area and the like of the CPU 21. The I/O unit 24 is a unit that receives a detection signal from a sensor and outputs a control signal to each unit.

Various functions of the controller 20 are implemented as the CPU 21 reads out a control program stored in the ROM 22, loads the control program in the RAM 23, and launches the program.

A first embodiment is described below.

FIG. 4 is a block diagram illustrating main components relating to power control of the multifunction copier according to a first embodiment.

The multifunction copier 1 includes a noise removal filter 302 coupled to a commercial AC power supply 301 and a rectifier 303 coupled to the subsequent stage of the noise removal filter 302. The rectifier 303 converts the AC voltage after noise removal into a predetermined DC voltage. The noise removal filter 302 removes noise and inrush current input from the AC power supply 301 and includes a varistor, a capacitor, a choke coil, and the like. The rectifier 303 is, for example, a diode bridge, and supplies the converted DC voltage to a subsequent DC load (an example of a second load). The DC load is a load that consumes DC power.

The fixing heaters 273 (273a and 273b), which are AC loads (examples of a first load), are connected via a power sensor 410 between the noise removal filter 302 and the rectifier 303. The fixing heaters 273 are loads that consume AC power. A power controller 420 turns a switch 274 (274a or 274b) on and off with a turn-on control signal, to control the AC power supplied to each fixing heater 273.

The power sensor 410 and the power controller 420 construct the power control system 400. Each function of the power controller 420 is implemented by the controller 20 illustrated in FIGS. 2 and 3.

### Outline of Power Control System

The power control system that controls AC power supplied to the fixing heaters 273 is described.

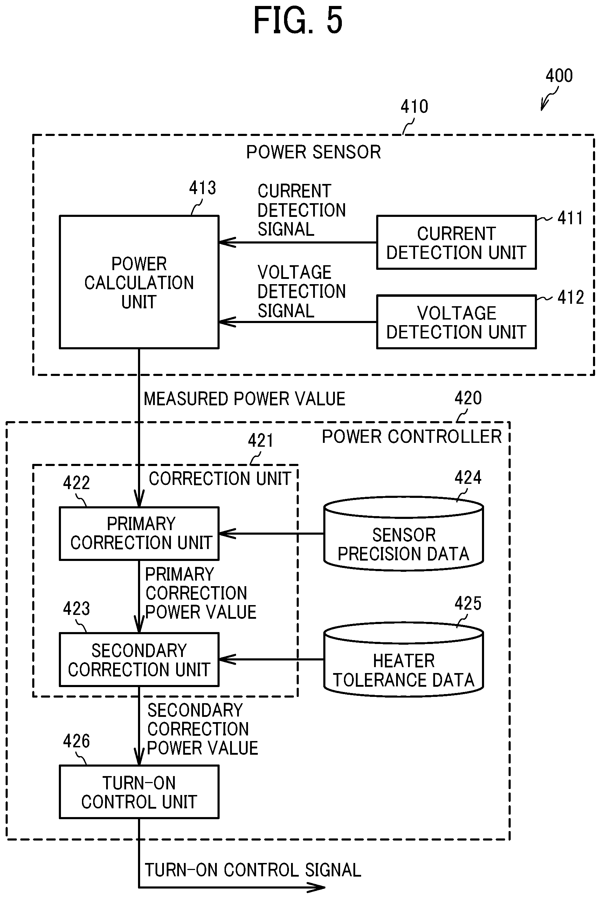

FIG. 5 is a block diagram that schematically illustrates a functional configuration of the power control system.

The power control system 400 (power control device) includes the power sensor 410 and the power controller 420. The power sensor 410 detects the power supplied to the fixing heaters 273 and outputs measured power values. The power controller 420 controls the power supplied to the fixing heaters 273 based on the measured power values output from the power sensor 410.

The power sensor 410 is a sensor module including a current detection unit 411, a voltage detection unit 412, and a power calculation unit 413.

The current detection unit 411 detects alternating currents supplied to the fixing heaters 273 and outputs analog current detection signals. The voltage detection unit 412 detects AC voltages applied to the fixing heaters 273 and outputs analog voltage detection signals. The power calculation unit 413 performs analog to digital conversion of the analog current detection signal and the voltage detection signal, and calculates, based on the digital current detection signal and the digital voltage detection signal thus obtained, the power (measured power value) supplied to the fixing heaters 273. The power calculation unit 413 is, for example, an integrated circuit (IC) incorporating elements required for calculating the measured power value.

The power controller 420 includes a correction unit 421 and a turn-on control unit 426.

The correction unit 421 corrects the measured power value output from the power sensor 410 based on the measurement precision (measurement tolerance) of the power sensor 410. The correction unit 421 includes a primary correction unit 422 and a secondary correction unit 423. The primary correction unit 422 performs primary correction on the measured power value based on data (sensor precision data 424) relating to the measurement precision of the power sensor 410, and outputs a primary correction power value. The secondary correction unit 423 performs secondary correction on the primary correction power value based on data (heater tolerance data 425) on a tolerance relating to the power consumption of the fixing heater 273, and outputs a secondary correction power value (final corrected power value).

The turn-on control unit 426 controls the power supplied to the fixing heaters 273 based on the corrected power values corrected by the correction unit 421. The turn-on control unit 426 calculates a turn-on command value based on the secondary correction power value, generates the turn-on control signal based on the turn-on command value, and outputs the signal to the switch 274. Further, the turn-on control unit 426 controls the power to be supplied to the fixing heaters 273 based on the secondary correction power value and the power to be supplied to other loads (in this case, particularly, the DC load) of the multifunction copier 1.

The turn-on control unit 426 can control the power supplied to the fixing heaters 273 by various methods such as pulse-width modulation (PWM) control, phase control, and half-wave control. The turn-on control signal output from the turn-on control unit 426 is to turn the switch 274 on and off at a predetermined timing, with the driver that drives the fixing heater 273. The power supplied to each fixing heater 273 is controlled to a desirable amount by turning on and off the switch 274 at a predetermined timing according to the turn-on control signal.

### Tolerance of Fixing Heater

The tolerance of the power consumption of the fixing heater 273 is the difference between a designed reference value (or designed reference power consumption) relating to the power consumption of the fixing heater 273 and a tolerable limit of the actual power consumption. The tolerance is expressed as a difference from the reference value (absolute error), a ratio to the reference value (relative error), or a percentage (relative error).

For example, a description is given of a case where the specified power consumption is expressed as 1000 W±5%. In this case, the designed reference value of the power consumption when power is constantly supplied (a state of always-on, a turn-on duty of 100%) is 1000 W, and the power consumed by each fixing heater falls in a range of from 950 W to 1050 W. In other words, the fixing heater having the specified consumption of 1000 W±5% has a plus tolerance of 5% (50 W) and a minus tolerance of 5% (50 W) with respect to the designed reference value of 1000 W for power consumption. Hereinafter, the power consumption value 1050 W obtained by adding the plus tolerance to the designed reference value is referred to as "power consumption upper limit."

For example, when the printer unit 200 needs a maximum of 950 W for fixing power, a fixing heater capable of outputting at least 950 W is selected as a fixing heater mounted on the printer unit 200. When the tolerance of the fixing heater is ±5%, a fixing heater having a specified power consumption of 1000 W±5% is selected since the power consumption is 950 W when the minus tolerance is added thereto. Hereinafter, a fixing heater that is a reference for selecting a fixing heater to be mounted in the printer unit is referred to as a "fixing heater as selection reference." The "fixing heater as selection reference" in this example is synonymous with such a fixing heater that the actual power consumption has a minus tolerance with respect to the designed reference value. That is, the fixing heater as selection reference consumes 950 W in the case of always-on. In this specification, it does not manner whether or not such a fixing heater actually exists.

### Tolerance of Power Sensor

The measurement error (tolerance) of the power sensor 410 is a value of allowable limit of the possible value as measurement value by the power sensor 410 with respect to the true value of the amount to be measured (here, power consumption). The allowable limit is expressed as a difference (absolute error) from the true value, a ratio to the true value (relative error), or a percentage (relative error) within the measurement range.

For example, in a case where the power sensor 410 having a tolerance of ±2% outputs a measurement value of 1000 W, as the power consumption of the fixing heater 273, the true value of the power consumption falls within the range of 980 W to 1020 W. That is, in the case of the power sensor 410 having the tolerance of ±2%, the maximum value of the plus-side error is 2% (20 W) and the maximum value of the minus-side error is 2% (20 W) with respect to the true value.

### Correction of Measurement Value

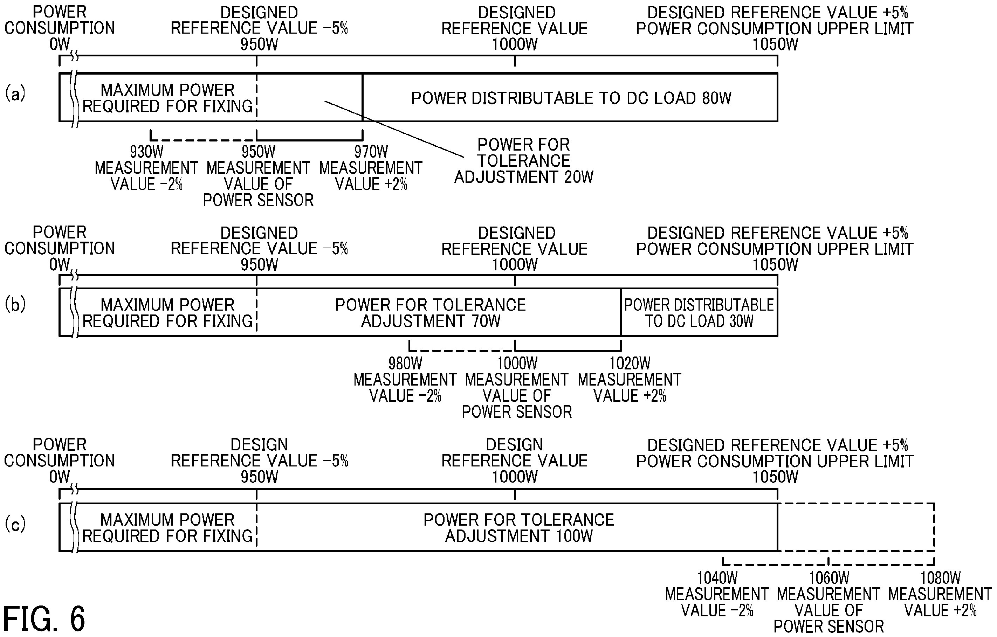

In FIG. 6, charts (a) to (c) are schematic diagrams illustrating methods for correcting measured power consumption.

Features of the present embodiment are particularly effective in a case where a maximum measurement tolerance allowable between the actual power consumption of the fixing heater 273 in the state of always-on and the measured power consumption measured by measurement means is smaller than the tolerance allowable between the designed reference power consumption of the fixing heater 273 and the amount of power actually consumed by the fixing heater 273 in the state of always-on.

A description is given below of the method of correcting the measured power consumption of the fixing heater 273, using the following example. In the example, the fixing heater 273 having the specified consumption of 1000W±5% selected as described above is constantly energized (turn-on duty is 100%), and the power sensor 410 having the tolerance of ±2% measures the power consumption.

As illustrated in charts (a) and (b) in FIG. 6, the correction unit 421 basically calculates a final corrected power value (secondary correction power value) by adding a plus tolerance of the power sensor 410 to the measurement value.

For example, as illustrated in the chart (a) in FIG. 6, when the power sensor 410 outputs the measurement value of 950 W, the correction unit 421 calculates the corrected power value as 970 W. That is, for the fixing heater in the state of always-on, the maximum power secured to be supplied to the fixing heater is calculated as 970 W by adding 20 W to the maximum power 950 W required for fixing.

Note that the power consumption of the fixing heater in the state of always-on is not smaller than 950 W due to the relationship between the specifications and the tolerance of the fixing heater 273. Even when the power sensor 410 outputs a measurement value of 930 W, the power value is corrected to 950 W by adding the maximum plus tolerance, and the corrected power value falls within the tolerable range of the fixing heater 273.

As illustrated in the chart (b) in FIG. 6, when the power sensor 410 outputs a measurement value of 1000 W, the correction unit 421 corrects the measurement value to 1020 W. That is, for the fixing heater in the state of always-on, the maximum power secured to be supplied to the fixing heater is calculated as 1020 W by adding 70 W to the maximum power 950 W required for fixing.

As illustrated in the chart (c) in FIG. 6, when the value obtained by adding the maximum plus tolerance of the power sensor 410 to the measurement value (e.g., 1060 W) output from the power sensor 410 exceeds 1050 W, the correction unit 421 calculates the final corrected power value (secondary correction power value) to be 1050 W, which is the power consumption upper limit of the fixing heater 273. This is because the power consumption of the fixing heater in the state of always-on does not exceed 1050 W according to the specifications of the selected fixing heater 273.

### Power Distribution Method

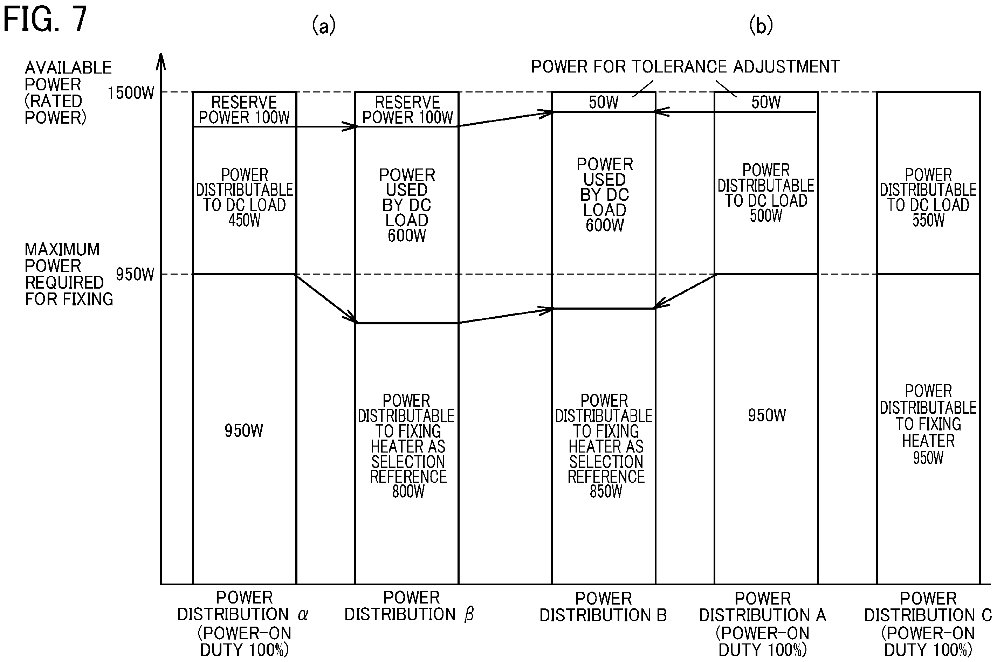

In FIG. 7, charts (a) and (b) illustrate examples of power distribution to the loads of the multifunction copier.

The charts (a) and (b) in FIG. 7 are for the example in which the maximum power (rated power) usable by the multifunction copier 1 is 1500 W, the maximum power required for fixing is 950 W, and the fixing heater 273 having a specified consumption of 1000 W±5% is mounted on the printer unit 200 of the multifunction copier 1.

The chart (a) in FIG. 7 illustrates a conventional power distribution example.

A power distribution α is an example of power distribution when the fixing heater is constantly energized. When a maximum of 950 W is required as power for fixing, at least 950 W is secured as power to be supplied to the fixing heater. However, the power consumption of the fixing heater in the state of always-on has the tolerance range, and the actual power consumption of each fixing heater is not known. Even in the printer unit equipped with a fixing heater having the maximum plus tolerance (consumes 1050 W in the state of always-on), it is necessary to distribute the power so that the power consumed by the entire multifunction copier does not exceed the rated power. Therefore, reserve power (power for tolerance adjustment) expressed as 1050 W - 950 W = 100W is secured for the fixing heater. Therefore, when the fixing heater is constantly energized, the maximum power that can be used by the DC load is 450 W.

It is assumed that the power consumption of the DC load increases as in a power distribution β, and the DC load requires power supply of 600 W. In this case, in order to prevent the total power consumption from exceeding the rated power of the multifunction copier, the power supplied to the fixing heater is reduced. However, it is necessary to continuously reserve a power of 100 W for the tolerance adjustment of the fixing heater. Therefore, in the conventional power control method, the power supplied to the fixing heater (turn-on duty of the fixing heater) is adjusted so that the power supplied to the fixing heater as selection reference becomes 800 W. As described above, when the power consumption of the DC load increases, the power supplied to the fixing heater is limited. Accordingly, disadvantageously, the multifunction copier requires a longer time for startup and recovery from standby.

The chart (b) in FIG. 7 illustrates an example of power distribution according to an embodiment of the present disclosure.

Power distribution A illustrates an example of power distribution when the fixing heater is constantly energized. As in the conventional example, at least 950 W is secured as the power supplied to the fixing heater. In the case where the power consumption of the fixing heater in the state of always-on is corrected to 1000 W based on the measurement of the power consumption of the fixing heater, the power for tolerance adjustment (reserve power) is calculated as 1000 W - 950 W = 50 W. That is, an additional power of 50 W, which is a difference from the conventional reserve power of 100 W, is distributable to the DC load. Therefore, the maximum power that can be used by the DC load in the state where the fixing heater is always-on is 500 W.

When the power consumption of the DC load increases as in the power distribution B and it becomes necessary to supply a power of 600 W to the DC load, the power supplied to the fixing heater is reduced similar to the conventional example, thereby preventing the total power consumption from exceeding the rated power of the multifunction copier. In the power control method according to the present embodiment, the difference (600 W - 500 W = 100 W) between the power of 600 W supplied to the DC load and the power of 500 W secured to the DC load in the state of always-on is distributed from the fixing heater to the DC load. Therefore, the power calculated as 950W - 100W = 850W can be supplied to the fixing heater as selection reference while the reserve power of 50W is continuously secured for the tolerance adjustment of the fixing heater. That is, the power supplied to the fixing heater can be increased by 50 W compared with the conventional power distribution β, and the restriction on the power supplied to the fixing heater is relaxed.

Further, as in a power distribution C, when the power consumption measured by the power sensor 410 is 930 W, the corrected power value is 950W. Therefore, in the power distribution in the state of always-on, the power supplied to the fixing heater is 950 W and the power supplied to the DC load is 550 W. Then, securing the reserve power is not necessary.

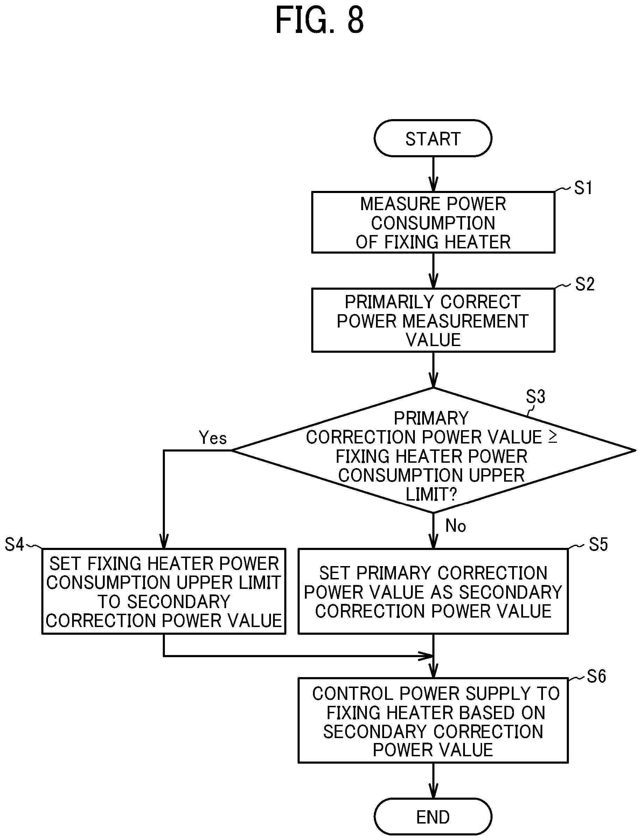

FIG. 8 is a flowchart illustrating processing relating to power control of the fixing heater performed by the power control system according to the present embodiment. This process is executed in the state where the fixing heater is always-on (the fixing heater operates with the turn-on duty of 100%), such as at the start-up of the multifunction copier.

In S1, the power sensor 410 measures the power consumption of the fixing heater 273 (measurement step). That is, the power calculation unit 413 inputs the analog current detection signal from the current detection unit 411, inputs the analog voltage detection signal from the voltage detection unit 412, calculates the power consumption of the fixing heater 273 based on digital signals converted from both the analog signals, and output the calculated value as the measured power value.

In S2, the correction unit 421 performs a primary correction on the measured power value based on the tolerance data of the power sensor 410 (primary correction step). That is, the correction unit 421 adds the maximum plus tolerance of the power sensor 410 to the measured power value output from the power sensor 410, thus calculating the primary correction power value.

In S3, the correction unit 421 compares the primary correction power value with the power consumption upper limit of the fixing heater 273, to determine whether the primary correction power value is equal to or greater than the power consumption upper limit. When the power of the fixing heater 273 in specifications is 1000 W±5%, the power consumption upper limit of the fixing heater 273 is 1050 W. When the primary correction power value is equal to or greater than the power consumption upper limit of the fixing heater 273 (Yes in S3), the process proceeds to S4. When the primary correction power value is less than the power consumption upper limit of the fixing heater 273 (No in S3), the process proceeds to S5.

In S4, the correction unit 421 sets the power consumption upper limit of the fixing heater 273 as the secondary correction power value, which is a final corrected power value (secondary correction step).

In S5, the correction unit 421 sets the primary correction power value calculated in S3 as the secondary correction power value, which is the final corrected power value (secondary correction step).

In S6, the turn-on control unit 426 determines the power to be distributed to the fixing heater 273 based on the secondary correction power value, and controls the power supplied to the fixing heater 273 based on the determined power (control step). Specifically, the turn-on control unit 426 generates a turn-on control signal corresponding to the determined power to control the switch 274, thereby controlling the power supplied to the fixing heater 273.

After the above-described correction processing is performed, the turn-on control unit 426 controls the power supplied to the fixing heater 273 based on the secondary correction power value and the power supplied to the DC load.

As described above, the control method according to the present embodiment can reduce the power reserved for adjusting the tolerance relating to the power consumption of the fixing heater and increase the power that can be supplied to the DC load. Thus, the power limitation on the heater can be relaxed.

### A variation is described below.

In a printer unit 200 that includes a plurality of fixing heaters 273 (273a, 273b, and so on), the secondary correction power value can be set for each of the plurality of fixing heaters as follows.

First, the power controller 420 calculates the secondary correction power value of the fixing heater 273a by setting one of the fixing heaters (e.g., the fixing heater 273a) in the state of always-on and setting another fixing heater (e.g., the fixing heater 273b) in the state of turn-off (turn-on duty 0%). Next, the power controller 420 calculates the secondary correction power value of the fixing heater 273b by setting one of the fixing heaters (e.g., the fixing heater 273a) in the state of turn-off and setting another fixing heater (e.g., the fixing heater 273b) in the state of always-on.

By executing the above-described processing with the power controller 420, power of each fixing heater can be measured using a smaller number of power sensors than the number of fixing heaters, and the secondary correction power value of each fixing heater can be obtained.

A second embodiment is described below.

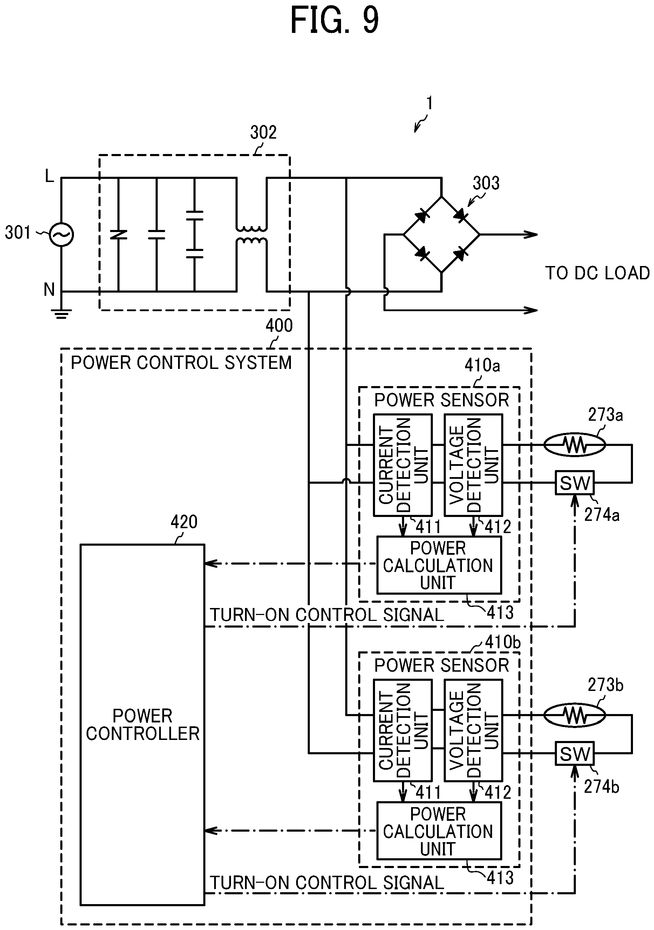

FIG. 9 is a block diagram illustrating main components relating to power control of a multifunction copier according to the second embodiment. The multifunction copier 1 according to the present embodiment includes a plurality of fixing heaters 273a and 273b and power sensors 410a and 410b respectively for the fixing heaters 273a and 273b.

The configuration and operation of the power sensors 410a and 410b and other configurations are the same as those in the first embodiment, and redundant descriptions are avoided.

As in the present embodiment, the power sensor can be provided for each fixing heater. In the multifunction copier including a plurality of fixing heaters, providing a power sensor for each of a plurality of fixing heaters can reduce the time required to calculate the secondary correction power value.

A third embodiment is described below.

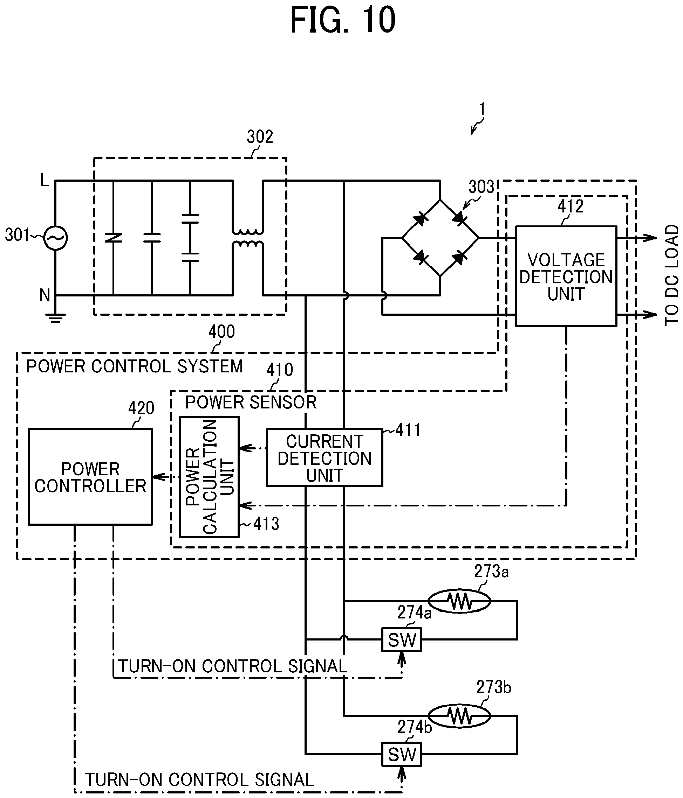

FIG. 10 is a block diagram illustrating main components relating to power control of a multifunction copier according to the third embodiment. The elements substantially same to those of the first embodiment are assigned with the same reference numerals, and redundant descriptions are avoided. In the multifunction copier 1 according to the present embodiment, the voltage detection unit 412 of the power sensor 410 is disposed on the DC load system line (subsequent to the rectifier 303).

The operations of the power sensor 410 and other configurations are the same as those of the first embodiment, and thus redundant descriptions are avoided.

As described above, the voltage detection unit 412 can be disposed either on the AC load system line (before the rectifier 303) or on the DC load system line.

Each function of the above-described embodiments can be implemented by one or a plurality of processing circuits. Here, the "processing circuit or circuitry" in the present specification includes a programmed processor to execute each function by software, such as a processor implemented by an electronic circuit, and devices, such as an application specific integrated circuit (ASIC), a digital signal processors (DSP), a field programmable gate array (FPGA), and conventional circuit components arranged to perform the recited functions.

### Power Consumption Apparatus

The multifunction copier 1 described in the above-described embodiments includes a plurality of loads (first load and second load) that consume power, and the multifunction copier 1 is an example of a power consumption apparatus that consumes power when each load is driven. Aspects of the present disclosure are applicable to such power consumption apparatuses in general.

That is, one aspect of the present disclosure is detecting the power supplied to the first load (an AC load, e.g., a fixing heater) and calculating a corrected power value based on the precision of the power sensor, thereby reducing the reserve power conventionally reserved for tolerance adjustment. The reduction in the reserve power can be distributed to the second load (e.g., a DC load). Accordingly, even when the power consumed by the second load increases, the power to be distributed from the first load to the second load can be reduced. Therefore, even when the power consumed by the second load increases, sufficient power can be supplied to the first load.

Each of the various aspects of the present disclosure provides the following effect.

### First Aspect

A power control device (e.g., the power control system 400) according to the present aspect includes measurement means (e.g., the power sensor 410) for measuring the power supplied to a first load (e.g., the fixing heater 273 as an example of the AC load), correction means (e.g., the correction unit 421) for correcting a measurement value measured by the measurement means based on a measurement tolerance of the measurement means, and control means (e.g., the turn-on control unit 426) for controlling the power supplied to the first load based on the corrected power value corrected by the correction means and a power consumption upper limit of the load.

The load is a component that is driven with power supplied from a power supply (e.g., a commercial AC power supply) and consumes the power. The load can be either a component that consumes AC power or a component that consumes DC power. The load whose power is measured by the measurement means can be either one load or a plurality of loads. The power consumption upper limit of the load is calculated as a sum of the maximum plus tolerance allowed for the load and the designed reference power consumption (or the reference power consumption in specifications) of the load.

The power control device according to the present aspect is mounted in a power consumption apparatus (e.g., the multifunction copier 1) that includes, for example, a plurality of loads (e.g., an AC load, an example of the first load and a DC load, an example of the second load) driven with power and consumes power.

A load constructed of a plurality of components has an individual difference in power consumption inherent to variations of the components and the like. Therefore, a predetermined difference is allowed between the designed reference value of the power consumed by the load in the state of always-on and the actual power consumption. In operating the power consumption apparatus, it is necessary to secure the power (reserve power) equivalent to the power consumption tolerance allowed for the load, to prevent the power consumption of the entire device from exceeding the rated power.

Further, an error between the measurement value measured by the measurement means and the true value is allowed within a predetermined range.

According to the present aspect, the power control device measures the power supplied to the first load (e.g., an AC load) and controls the power supplied to the first load based on the corrected measurement value. Therefore, the reserve power exceeding the designed reference value can be minimized to fit the individual difference of the first load. According to the present aspect, the more the actual power consumption of the load in the state of always-on deviates to the negative side from the designed reference power consumption, the smaller the preliminarily secured reserve power can be.

Therefore, according to the present aspect, the reserve power can be set for each first load, and the power distributed to the second load can be further increased. Further, even when the power consumed by the second load increases and the reduction of the power supplied to the first load is required, the reduction of the power supplied to the first load can be minimized.

### Second Aspect

In the power control device (the power control system 400) according to the present aspect, the maximum measurement tolerance allowable between the actual power consumption of the first load (e.g., the fixing heater 273, an example of the AC load) in the state of always-on and the measured power consumption by the measurement means (the power sensor 410) is smaller than the maximum tolerance allowable between the designed reference power consumption of the load and the amount of power actually consumed by the load in the state of always-on.

In the present disclosure, it is possible to use measurement means having a maximum measurement tolerance greater than the maximum tolerance in power consumption of the first load.

However, when the measurement means having the maximum measurement tolerance smaller than the maximum tolerance in power consumption of the first load is used as in the present aspect, the rate of apparatuses capable of increasing the power supplied to the first load increases, and thus aspects of the present disclosure are particularly effective.

### Third Aspect

In the power control device (the power control system 400) according to the present aspect, the correction means (the correction unit 421) is configured to add the maximum plus measurement error allowed for the measurement means (the power sensor 410) to the measurement value to calculate the primary correction power value, and set the primary correction power value as the corrected power value in a case where the primary correction power value is equal to or smaller than the power consumption upper limit.

Even when the actual power consumed by the first load (the fixing heater 273 as an example of the AC load) is greater than the measurement value, the actual power consumption does not exceed the primary correction power value that is the sum of the measurement value and the maximum plus measurement error.

According to the present aspect, since a value that is equal to or greater than the actual power consumption is set as the corrected power value, power supply to the load can be optimized within the range of the rated power of the power consumption apparatus including the first load. In addition, the present aspect can solve inconveniences such as a delay of recovery of the first load (and the apparatus including the first load) and a decrease in productivity, which occurs when the power supplied to the first load increases.

### Fourth Aspect

In the power control device (the power control system 400) according to the present aspect, the correction means (e.g., the correction unit 421) is configured to add the maximum plus measurement error allowed for the measurement means (the power sensor 410) to the measurement value to calculate the primary correction power value, and sets the power consumption upper limit as the corrected power value in a case where the primary correction power value is greater than the power consumption upper limit.

Since the power consumption upper limit of the load is the sum of the maximum plus tolerance allowed for the load to the designed reference power consumption (or the reference power consumption in specifications) of the load, the actual power consumption does not exceed the power consumption upper limit.

According to the present aspect, since the power consumption upper limit is set as the corrected power value, the power supply to the load can be optimized within the range of the rated power of the power consumption apparatus including the first load. In addition, the power limitation on the first load can be minimized.

### Fifth Aspect

The power consumption apparatus (e.g., the multifunction copier 1) according to the present aspect includes the power control device (e.g., the power control system 400) and the load (e.g., the fixing heater 273 as an example of the AC load) driven with the power externally supplied.

The power consumption apparatus according to the present aspect provides the effects of the above-described aspects.

### Sixth Aspect

The power consumption apparatus (e.g., the multifunction copier 1) according to the present aspect includes the load (the fixing heater 273 as the AC load) that is the target of measurement by the measurement means (e.g., the power sensor 410) and control by the control means (e.g., the turn-on control unit 426) and another load (e.g., a DC load) that is different from the load being such a target and driven with supplied power.

The power consumption apparatus according to the present aspect provides the effects of the above-described aspects.

### Aspect 7

In the present aspect, an image forming apparatus (the multifunction copier 1) to form a toner image on a recording medium includes the power control device (the power control system 400) and a fixing heater (the fixing heater 273) that is the load and fixes the toner image on the recording medium.

The image forming apparatus according to the present aspect provides the effects of the above-described aspects.

In particular, in the present embodiment, since the power supplied to the fixing heater can be maximized in accordance with the individual difference of the fixing heater, inconveniences such as a delay in the recovery of the first load (and the apparatus including the first load) and a decrease in productivity can be solved. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone, such as a wireless access protocol (WAP) or 3G-compliant phone, and so on. Since the present invention can be implemented as software, each and every aspect of the present invention thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a transmission control protocol/internet protocol (TCP/IP) signal carrying computer code over an IP network, such as the Internet. The carrier medium can also comprise a storage medium for storing processor readable code such as a floppy disk, hard disk, compact disc read only memory (CD-ROM), magnetic tape device or solid state memory device.

## Claims

1. A power control device (400) comprising:
measurement means (410) for measuring electrical power supplied to a load (273); and
control means (426) for controlling the power supplied to the load (273), correction means (421) being for:
adding a maximum plus measurement error of the measurement means (410) to the measurement value to calculate a primary correction power value;
determining whether the primary correction power value is greater than a power consumption upper limit, the power consumption upper limit being obtained by adding a designed reference power consumption value of the load (273) and its maximum plus tolerance;
setting the primary correction power value as the corrected power value in response to a determination that the primary correction power value is not greater than the power consumption upper limit, and
setting the power consumption upper limit as the corrected power value in response to a determination that the primary correction power value is greater than the power consumption upper limit so that the corrected power value does not exceed the power consumption upper limit, wherein
the control means (426) is for controlling the power supplied to the load (273) based on the corrected power value corrected by the correction means (421).

2. The power control device (400) according to claim 1,
wherein a maximum measurement tolerance between an actual power consumption of the load (273) in a state of always-on and a measurement value of the actual power consumption measured by the measurement means (410) is smaller than a maximum tolerance between a designed reference power consumption of the load (273) and the actual power consumption of the load (273) in the state of always-on.

3. A power consumption apparatus (1) comprising:
the power control device (400) according to any one of claim 1 or 2; and
the load driven with the supplied power.

4. The power consumption apparatus (1) according to claim 3, further comprising another load (XX) that is driven with the supplied power and different from the load (273) being a target of the measurement means (410) and the control means (426).

5. An image forming apparatus (1) configured to form a toner image on a recording medium, the image forming apparatus (1) comprising:
the power control device (400) according to claim 1 or 2; and
a fixing heater (273) that is the load and configured to fix the toner image on the recording medium.

6. A method for controlling power comprising:
measuring (S1), with measurement means (410), electrical power supplied to a load (273) to output a measurement value;
correcting the measurement value based on a measurement tolerance of the measurement means (410) to output a corrected power value; and
controlling (S6) the power supplied to the load (273) based on the corrected power value and a power consumption upper limit of the load (273), wherein
the corrected power value is obtained in the following steps of
adding (S2) a maximum plus measurement error of the measurement means (410) to the measurement value to calculate a primary correction power value;
determining (S3) whether the primary correction power value is greater than a power consumption upper limit, the power consumption upper limit being obtained by adding a designed reference power consumption value of the load (273) and its maximum plus tolerance;
setting (S5) the primary correction power value as the corrected power value in response to a determination that the primary correction power value is not greater than the power consumption upper limit; and
setting (S4) the power consumption upper limit as the corrected power value in response to a determination that the primary correction power value is greater than the power consumption upper limit so that the corrected power value does not exceed the power consumption upper limit.

7. Carrier means carrying computer readable code for controlling a computer to carry out the method according to claim 6.

## Patentansprüche

1. Leistungssteuerungsvorrichtung (400), die umfasst:
Messmittel (410) zum Messen der an eine Last (273) zugeführten elektrischen Leistung; und
Steuerungsmittel (426) zum Steuern der der ersten Last (273) zugeführten Leistung,
Korrekturmittel (421) zum:
Addieren eines maximalen Plus-Messfehlers der Messmittel (410) zum Messwert, um einen primären Korrekturleistungswert zu berechnen;
Bestimmen, ob der primäre Korrekturleistungswert größer als eine obere Leistungsverbrauchsgrenze ist, wobei die obere Leistungsverbrauchsgrenze durch Addieren eines ausgelegten Referenz-Leistungsverbrauchswerts der Last (273) und ihrer maximalen Plustoleranz erhalten wird;
Festlegen des primären Korrekturleistungswerts als korrigierter Leistungswert als Reaktion auf eine Bestimmung, dass der primäre Korrekturleistungswert nicht größer als die obere Leistungsverbrauchsgrenze ist; und
Festlegen der oberen Leistungsverbrauchsgrenze als korrigierter Leistungswert als Reaktion auf eine Bestimmung, dass der primäre Korrekturleistungswert größer als die obere Leistungsverbrauchsgrenze ist, so dass der korrigierte Leistungswert die obere Leistungsverbrauchsgrenze nicht überschreitet, wobei
das Steuerungsmittel (426) zum Steuern der der Last (273) zugeführten Leistung auf der Grundlage des durch die Korrektureinrichtung (421) korrigierten Leistungswerts dient.

2. Leistungssteuerungsvorrichtung (400) nach Anspruch 1,
wobei eine maximale Messtoleranz zwischen einem tatsächlichen Leistungsverbrauch der Last (273) in einem Immer-Ein-Zustand und einem Messwert des tatsächlichen Leistungsverbrauchs, der durch das Messmittel (410) gemessen wird, kleiner ist als eine maximale Toleranz zwischen einem vorgesehenen Referenz-Leistungsverbrauch der Last (273) und dem tatsächlichen Leistungsverbrauch der Last (273) im Immer-Ein-Zustand.

3. Leistungsverbrauchsvorrichtung (1), die umfasst:
die Leistungssteuerungsvorrichtung (400) gemäß einem der Ansprüche 1 oder 2; und
die Last (273), die mit der bereitgestellten Leistung betrieben wird.

4. Leistungsverbrauchsvorrichtung (1) nach Anspruch 3, die ferner eine andere Last (XX) umfasst, die mit der bereitgestellten Leistung betrieben wird, und sich von der Last (273) unterscheidet, die ein Ziel der Messmittel (410) und der Steuerungsmittel (426) ist.

5. Bilderzeugungsgerät (1), das dazu konfiguriert ist, ein Tonerbild auf einem Aufzeichnungsmedium zu erzeugen, wobei das Bilderzeugungsgerät (1) umfasst:
die Leistungssteuerungsvorrichtung (400) gemäß Anspruch 1 oder 2; und
eine Fixierheizung (273), die die Last darstellt und dazu konfiguriert ist, das Tonerbild auf dem Aufzeichnungsmedium zu fixieren.

6. Verfahren zum Steuern einer Leistung, das umfasst:
Messen (S1), mit Messmitteln (410), einer elektrischen Leistung, die einer Last (273) zugeführt wird, zum Ausgeben eines Messwerts;
Korrigieren des Messwerts basierend auf einer Messtoleranz des Messmittels (410), um einen korrigierten Leistungswert auszugeben; und
Steuern (S6) der der Last (273) zugeführten Leistung auf der Grundlage des korrigierten Leistungswerts und einer oberen Leistungsverbrauchsgrenze der Last (273), wobei
der korrigierte Leistungswert in den folgenden Schritten ermittelt wird:
Addieren (S2) eines maximalen Plus-Messfehlers des Messmittels (410) zum Messwert, um einen primären Korrekturleistungswert zu berechnen;
Bestimmen (S3), ob der primäre Korrekturleistungswert größer als eine obere Leistungsverbrauchsgrenze ist, wobei die obere Leistungsverbrauchsgrenze durch Addieren eines ausgelegten Referenz-Leistungsverbrauchswerts der Last (273) und ihrer maximalen Plustoleranz erhalten wird;
Festlegen (S5) des primären Korrekturleistungswertes als korrigierter Leistungswert als Reaktion auf eine Bestimmung, dass der primäre Korrekturleistungswert nicht größer als die obere Leistungsverbrauchsgrenze ist; und
Festlegen (S4) der oberen Leistungsverbrauchsgrenze als korrigierter Leistungswert als Reaktion auf eine Bestimmung, dass der primäre Korrekturleistungswert größer als die obere Leistungsverbrauchsgrenze ist, so dass der korrigierte Leistungswert die obere Leistungsverbrauchsgrenze nicht überschreitet.

7. Trägermittel, das computerlesbaren Code zum Steuern eines Computers zur Ausführung des Verfahrens gemäß Anspruch 6 trägt.

## Revendications

1. Dispositif de régulation d'énergie (400) comprenant :
un moyen de mesure (410) destiné à mesurer l'énergie électrique fournie à une charge (273),
un moyen de régulation (426) destiné à réguler l'énergie fournie à la charge (273),
un moyen de correction (421) destiné à :
ajouter une erreur de mesure maximale plus du moyen de mesure (410) à la valeur de mesure pour calculer une valeur d'énergie de correction primaire,
déterminer si la valeur d'énergie de correction primaire est supérieure à une limite supérieure de consommation d'énergie, la limite supérieure de consommation d'énergie étant obtenue par addition d'une valeur de consommation d'énergie de référence de la charge (273) et de sa tolérance maximale plus ;
définir la valeur d'énergie de correction primaire comme valeur d'énergie corrigée en réaction à la détermination du fait que la valeur d'énergie de correction primaire n'est pas supérieure à la limite supérieure de consommation d'énergie, et
définir la limite supérieure de consommation d'énergie comme valeur d'énergie corrigée en réaction à la détermination du fait que la valeur d'énergie de correction primaire est supérieure à la limite supérieure de consommation d'énergie, de façon que la valeur d'énergie corrigée ne dépasse pas la limite supérieure de consommation d'énergie, étant entendu que
le moyen de régulation (426) est destiné à réguler l'énergie fournie à la charge (273) compte tenu de la valeur d'énergie corrigée par le moyen de correction (421).

2. Dispositif de régulation d'énergie (400) selon la revendication 1,
dans lequel une tolérance maximale de mesure entre une consommation d'énergie réelle de la charge (273) dans un état de marche permanente et une valeur de mesure de la consommation d'énergie réelle mesurée par le moyen de mesure (410) est inférieure à une tolérance maximale entre une consommation d'énergie de référence de la charge (273) et la consommation d'énergie réelle de la charge (273) en état de marche permanente.

3. Appareil de consommation d'énergie (1) comprenant :
le dispositif de régulation d'énergie (400) selon l'une quelconque des revendications 1 et 2, et
la charge entraînée par l'énergie fournie.

4. Appareil de consommation d'énergie (1) selon la revendication 3, comprenant en outre une autre charge (XX), différente de la charge (273), entraînée par l'énergie fournie et consistant en une cible du moyen de mesure (410) et du moyen de régulation (426).

5. Appareil de formation d'image (1) conçu pour former une image toner sur un support d'impression, l'appareil de formation d'image (1) comprenant :
le dispositif de régulation d'énergie (400) selon la revendication 1 ou 2, et
un élément chauffant de fixation (273) consistant en la charge et conçu pour fixer l'image toner sur le support d'impression.

6. Procédé de régulation d'énergie, comprenant :
la mesure (S1), à l'aide d'un moyen de mesure (410), de l'énergie électrique fournie à une charge (273) afin d'obtenir une valeur de mesure ;
la correction de la valeur de mesure compte tenu d'une tolérance de mesure du moyen de mesure (410) pour générer une valeur d'énergie corrigée ; et
la régulation (S6) de l'énergie fournie à la charge (273) compte tenu de la valeur d'énergie corrigée et d'une limite supérieure de consommation d'énergie de la charge (273) ; étant entendu que
la valeur d'énergie corrigée est obtenue au cours des étapes suivantes, à savoir
l'ajout (S2) d'une erreur de mesure maximale plus du moyen de mesure (410) à la valeur de mesure pour calculer une valeur d'énergie de correction primaire ;
la détermination (S3) du fait que la valeur d'énergie de correction primaire est supérieure ou non à une limite supérieure de consommation d'énergie, la limite supérieure de consommation d'énergie étant obtenue par addition d'une valeur de consommation d'énergie de référence de la charge (273) et de sa tolérance maximale plus ;
la définition (S5) de la valeur d'énergie de correction primaire comme valeur d'énergie corrigée en réaction à la détermination du fait que la valeur d'énergie de correction primaire n'est pas supérieure à la limite supérieure de consommation d'énergie ; et
la définition (S4) de la limite supérieure de consommation d'énergie comme valeur d'énergie corrigée en réaction à la détermination du fait que la valeur d'énergie de correction primaire est supérieure à la limite supérieure de consommation d'énergie, de façon que la valeur d'énergie corrigée ne dépasse pas la limite supérieure de consommation d'énergie.

7. Support portant un code lisible par ordinateur et permettant de commander un ordinateur afin de réaliser le procédé selon la revendication 6.
